# FASCICULE DE BREVET EUROPEEN

(11) **EP 0 519 778 B1**
(45) Date de publication et mention de la délivrance du brevet: **07.09.1994**
(21) Numéro de dépôt: 92401509.2
(22) Date de dépôt: 03.06.1992
(51) Int. Cl.: F01N 7/08, F01N 3/28

(54) **Ligne d'échappement permettant un amorçage rapide du catalyseur**
Motorauspufflinie zum schnellen Erregen eines Katalysators
Exhaust line allowing rapid excitation of the catalytic converter

(30) Priorité: 18.06.1991 FR 9107560
(43) Date de publication de la demande: 23.12.1992
(73) Titulaire: INSTITUT FRANCAIS DU PETROLE, 92502 Rueil-Malmaison (FR)
(72) Inventeur: Castagne, Michel, F-91120 Palaiseau (FR)

(56) Documents cités:
- EP-A- 0 420 462
- EP-A- 0 431 985
- DE-A- 2 104 711
- DE-A- 2 851 675
- DE-A- 3 738 538
- DE-C- 3 940 747
- FR-A- 656 519

## Description

La présente invention concerne les moteurs à combustion interne dont la ligne d'échappement comprend au moins un catalyseur.

D'une façon générale, un catalyseur a pour rôle d'activer les réactions d'oxydation (COHC) ou de réduction (NO₂) qui ont lieu à l'état naturel et qui conduisent au dépôt de corps polluants à l'intérieur de la ligne d'échappement mais dont des cinétiques sont trop lentes à la température des gaz d'échappement.

Un catalyseur ou pot catalytique placé sur la ligne d'échappement d'un moteur est destiné à réduire les émissions de certains polluants tels que CO, HC, NOₓ, ...qui sont présents dans les gaz d'échappement.

Or, froid, un pot catalytique est sans action sur les polluants émis par le moteur. Un pot catalytique doit atteindre une température minimale pour commencer à agir. Il existe donc un délai dit d'amorçage pendant lequel des émissions de polluants ne sont pas diminuées par le catalyseur. Ce délai doit donc être aussi court que possible. De façon courante, la durée d'amorçage d'un pot catalytique est de l'ordre de 2 minutes.

Des normes en vigueur dans la plupart des pays industrialisés indiquent les limites d'émission des polluants admises.

Plusieurs systèmes ont déjà été proposés afin de réaliser une montée en température du catalyseur aussi rapide que possible.

Il est classique d'isoler de façon très soigneuse le catalyseur afin de limiter les pertes thermiques. La demande de brevet EP 0177479 divulgue un tel exemple.

Cependant l'inconvénient des systèmes d'isolation thermique des catalyseurs réside en une surchauffe des catalyseurs une fois amorcés.

De façon différente, le Demandeur a proposé dans la demande de brevet Français FR 2608677 un dispositif et un procédé d'amorçage rapide d'un catalyseur selon lequel une canalisation de dérivation est prévue sur la canalisation principale d'échappement, afin de moduler l'injection des gaz d'échappement vers le catalyseur.

La demande de brevet DE 3406968 couvre un dispositif de montée en température rapide d'un catalyseur, qui comprend deux conduites différentes l'une refroidie et l'autre non refroidie, qui se rejoignent en amont du catalyseur et dont le débit est réglé en fonction de la température du catalyseur.

La demande PCT WO 89/10470 divulgue un système de chauffage par résistance électrique installé au plus près du catalyseur.

Cette méthode de chauffage est sans doute efficace, mais difficile à mettre en oeuvre. De plus la résistance risque de créer des surchauffes locales préjudiciables à la bonne intégrité du catalyseur.

Enfin, le document EP-A1-0177479 peut être cité à titre d'arrière-plan technologique car il montre un catalyseur classique, bien isolé thermiquement, et muni d'une grille destinée à mieux répartir les gaz dans le catalyseur.

La présente invention permet de remédier aux inconvénients précités en proposant une ligne d'échappement améliorée.

L'objet essentiel de l'invention réside en une amélioration de la ligne d'échappement, notamment au plan de la durée d'amorçage du catalyseur.

Un autre objet de la présente invention consiste à mieux répartir le flux des gaz d'échappement arrivant dans le catalyseur afin d'améliorer ses performances à chaud.

Les critères nécessaires pour améliorer l'efficacité à froid d'un catalyseur sont :
- une section réduite d'injection des gaz d'échappement dans le pot catalytique de façon à créer une zone chaude propice à l'amorçage des réactions;
- une isolation thermique de la ligne;
- une limitation du temps de séjour des gaz dans la ligne afin de limiter les pertes thermiques.

De plus, pour améliorer à chaud l'efficacité et la tenue du catalyseur il est nécessaire :
- d'avoir une section importante au niveau de l'injection des gaz d'échappement sur le pot catalytique;
- de permettre l'évacuation des pics de chaleur grâce à des pertes thermiques sur la ligne, en amont du catalyseur.
- d'assurer une bonne homogénéité des vitesses dans cette section.

Ces critères sont, on le voit, contradictoires et c'est pourquoi la plupart des conceptions proposées jusqu'ici améliorent les performances du pot d'échappement soit à chaud, soit à froid.

De façon différente, la présente invention vise à améliorer le fonctionnement d'un catalyseur aussi bien à chaud qu'à froid.

Pour ce faire, la présente demande a pour objet un dispositif placé sur la tubulure d'échappement d'un moteur à combustion interne, ladite tubulure débouchant d'un coté dans le collecteur des gaz de combustion issus du ou des cylindres, et aboutissant par son autre extrémité au catalyseur.

Selon l'invention, le dispositif comprend un tube, interne et de section réduite par rapport à ladite tubulure, d'épaisseur faible et ayant une première extrémité débouchant à proximité dudit catalyseur, et un moyen destiné à obturer sélectivement le volume (intertubes) délimité entre ledit tube et la tubulure, en fonction de la température du catalyseur.

Selon un mode de réalisation de l'invention, ledit moyen d'obturation sélective est constitué d'un élément bilame annulaire, fixé sur l'extrémité du tube interne.

Selon un autre mode de réalisation de l'invention, ledit moyen d'obturation sélective est constitué d'un élément annulaire dont la section recouvre complètement l'entrée dudit espace intertube lorsque le catalyseur n'est pas amorçé.

Plus précisément ledit élément annulaire peut être constitué de deux demi-anneaux, chaque demi-anneau pouvant tourner autour d'un axe sensiblement diamétral de sorte que chaque demi-anneau peut être amené en partie centrale de l'embouchure des tubes lorsque le volume intertube doit être perméable aux gaz d'échappement.

Sans sortir du cadre de l'invention, l'élément d'obturation est annulaire et est constitué d'une bague pouvant coulisser axialement entre une première et une deuxième butée, lesdites butées correspondant respectivement à la fermeture de l'espace intertube et à l'ouverture dudit espace vis-à-vis des gaz d'échappement.

Avantageusement, ledit moyen d'obturation sélective consiste en un élément tubulaire perforé agencé téléscopiquement vis-à-vis d'une partie du tube interne, des perforations dans l'élément tubulaire et dans le tube interne coopérant ensemble afin d'obturer sélectivement dedit volume intertubes.

Préférentiellement, le moyen d'obturation sélective est placé à l'extrémité du tube reliée au collecteur.

D'autres caractéristiques et avantages de la présente invention apparaîtront mieux a la lecture de la description qui va suivre, faite en référence aux figures annexées sur lesquelles :
- la figure 1 est une coupe longitudinale d'un premier mode de réalisation de l'invention;
- les figures 2 et 3 sont des perspectives simplifiées montrant le moyen d'obturation respectivement dans sa position de fermeture puis d'ouverture du volume intertube;
- la figure 4 est une coupe longitudinale dans un plan perpendiculaire d'un mode de réalisation de l'invention proche à celui de la figure 1;
- la figure 5 est une coupe longitudinale d'un autre mode de réalisation de l'invention, comportant un élément d'obturation constitué en deux demi-anneaux;
- la figure 6 est une vue en perspective des demi-anneaux d'obturation;
- la figure 7 est une coupe simplifiée montrant le fontionnement de l'élément d'obturation annulaire;
- la figure 8 est une coupe longitudinale partielle d'un autre mode de réalisation de l'invention muni d'une bague d'obturation coulissante;
- la figure 9 est une coupe longitudinale d'un mode de réalisation de l'invention comportant comme moyen d'obturation sélective un double tube perforé;
- les figures 10 et 11 montrent en perspectives simplifiées le moyen double tube d'obturation, respectivement en position fermée et en position ouverte.

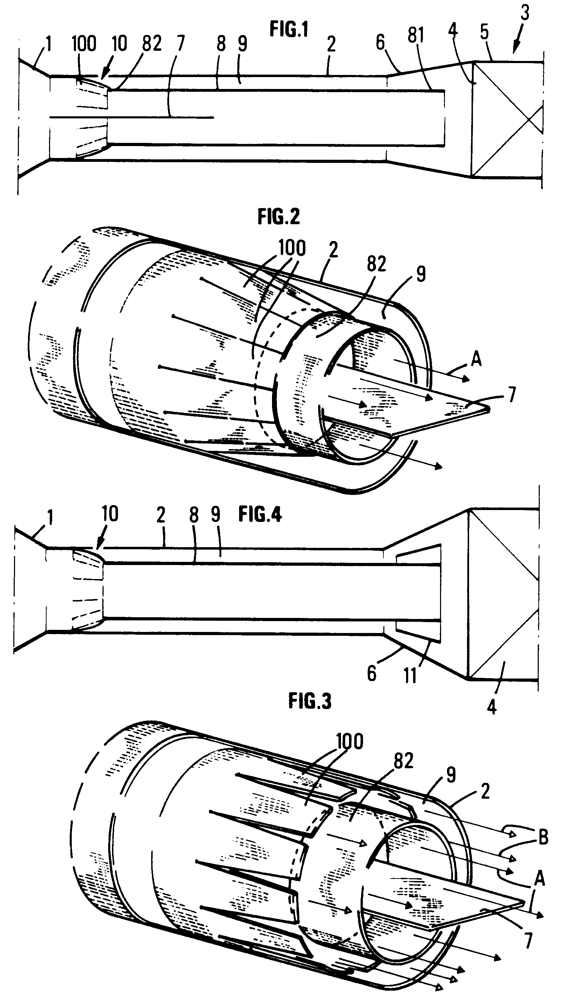

Comme il apparait sur la figure 1 notamment, la ligne d'échappement d'un moteur multicylindre comporte de façon classique un collecteur 1 dans lequel se rejoignent les conduites d'échappement des différents cylindres, et un tube 2 ou tuyau d'échappement.

La présente invention concerne les moteurs mono- ou multicylindre dont la ligne d'échappement comporte en outre un catalyseur ou pot catalytique destiné à éliminer les polluants des gaz d'échappement.

De façon connue, un pot catalytique 3 peut être constitué par un monolithe 4 en céramique formant le support du catalyseur proprement dit. Ce support du catalyseur est percé de plusieurs milliers de canaux parallèles traversés par les gaz d'échappement. Le monolithe peut aussi être en feuilles métalliques.

La substance active catalytique est généralement un métal précieux tel que platine, palladium et/ou rhodium, déposé sur une couche poreuse appelée wash-coat, dont le but est d'augmenter la surface de contact gaz-élément catalytique. Cette couche poreuse est le plus souvent constituée d'alumine.

Le monolithe 4 peut être entouré par exemple d'un feutre céramique (non présenté) pour son isolation thermique et sa protection vis-à-vis des vibrations, chocs,... .Le monolithe 4 est préférentiellement situé dans une enveloppe 5 en acier inox par exemple.

Il est encore connu de raccorder cette enveloppe 5 par un cône 6 au tube d'échappement 2.

Une plaque de partition 7 peut en outre être placée en sortie du collecteur 1 afin d'éloigner la zone de mélange des différents courants gazeux vis-a-vis du collecteur 1.

La présente invention se situe avantageusement dans une ligne d'échappement telle qu'il vient d'être décrit.

Selon l'invention on prévoit à l'intérieur du tube d'échappement 2 au moins un tube dit "tube interne" 8, d'épaisseur assez fine et de section telle qu'un espace annulaire 9 encore appelé espace inter-tubes dans la suite de ce texte, est ménagé.

Le tube interne 8 comporte une extrémité 81 située dans l'espace conique défini par le cône 6 à proximité du monolithe 4, sur lequel il crée un effet de jet au centre. Ce tube 8 peut éventuellement être revêtu d'un matériau réfractaire pour en améliorer la tenue thermique.

La seconde extrémité 82 du tube 8, située à proximité du collecteur 1 est avantageusement pourvue d'un moyen 10 destiné à obturer sélectivement l'espace inter-tubes 9, en fonction d'au moins un paramètre de fonctionnement du moteur.

De préférence, ce paramètre sera la température prise au niveau du catalyseur ou au niveau des gaz d'échappement dans le collecteur 1. Tout capteur connu en soi peut bien entendu fournir cette information mais un tel capteur n'est pas toujours nécessaire.

Le choix d'une petite section pour le tube interne 8 est important car il favorise la mise en action à froid du catalyseur en créant une "zone chaude" au centre du catalyseur, ce qui amorce la réaction catalytique fortement exothermique qui s'étend ensuite à l'ensemble du monolithe 4.

La figure 1 montre un premier mode de réalisation de l'invention selon lequel le moyen 10 d'obturation sélective est constitué d'un bilame 100 raccordé sur le tube extérieur 2. Le choix des matériaux pour le bilame 100 est tel qu'il obture l'espace 9 lorsque le catalyseur 3 n'est pas amorçé, c'est-à-dire n'a pas atteint une certaine température. L'étanchéité du dispositif d'obturation n'a pas besoin d'être totale.

La figure 2 montre le trajet A des gaz d'échappement dans ce cas. Une lame de gaz sensiblement statique comportant généralement de l'air frais est donc ainsi présente dans l'espace inter-tubes 9, ce qui isole thermiquement la ligne. D'autre part, le tube 8 étant fin, les pertes thermiques dans ce tube sont davantage minimisées.

Cependant, l'isolation thermique de la ligne d'échappement ne doit pas être trop figée car à l'inverse, lorsque les gaz d'échappement atteignent de très fortes températures (supérieures à 900°C par exemple) en sortie du moteur, il ne s'agit pas de créer des chocs thermiques trop importants qui puissent dégrader le monolithe de façon irréversible.

C'est pourquoi une certaine dissipation de chaleur est nécessaire en amont du catalyseur lors de certaines conditions de fonctionnement. L'invention prévoit à cet effet que le moyen 10, par exemple sous la forme du bilame 100, est capable de découvrir l'espace 9 lorsque la température des gaz d'échappement et/ou du catalyseur 4 a atteint un certain seuil.

La figure 3 montre le trajet B des gaz d'échappement dans ce cas. Ainsi, les gaz d'échappement débouchent sur toute la section du monolithe 4. D'autre part une certaine dissipation de chaleur peut avoir lieu en amont du monolithe.

Enfin la pleine ouverture de l'espace inter-tubes 9 permet de limiter les pertes de charge en amont du monolithe, et de conserver des vitesses importantes et homogènes des gaz.

La figure 4 montre l'extrémité 81 du tube 8 qui est entourée d'ailettes 11 destinées à mieux homogénéiser les vitesses des gaz ayant traversé l'espace 9. Une meilleure répartition des gaz, vers toute la surface du monolithe 4, est obtenue grâce a ces ailettes. En effet, le catalyseur 4 étant couramment un ovaloïde, on a placé les ailettes 11 afin de mieux répartir les gaz.

Tout moyen connu en soi peut être utilisé pour former les ailettes 11. Leur fixation peut se faire par exemple sur la surface métallique du cône 6 du catalyseur, par simple soudure.

La bonne répartition des gaz sur toute la surface du catalyseur est en effet très importante.

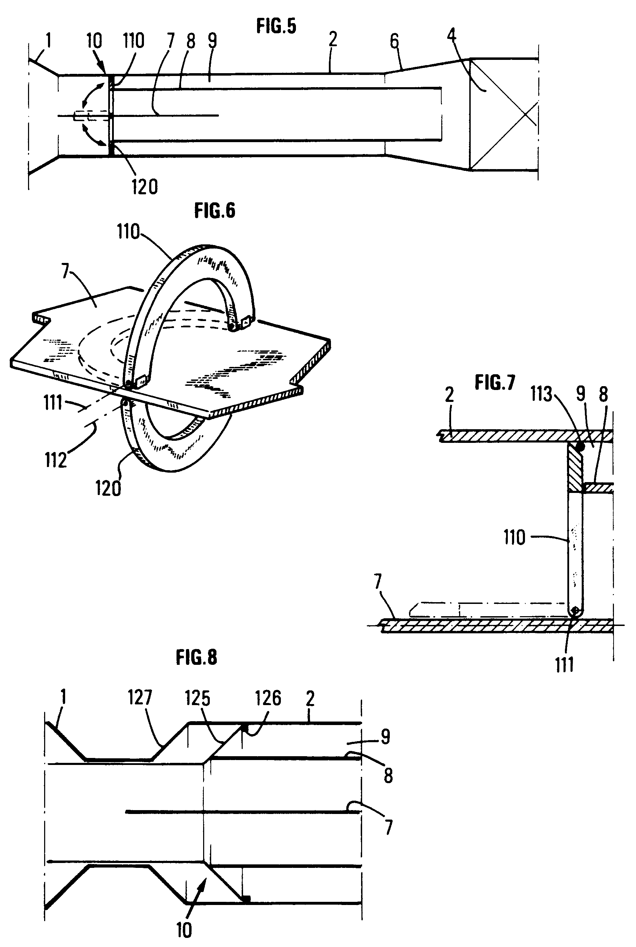

La figure 5 montre un autre mode de réalisation de l'invention, qui diffère de celui de la figure 1 par le moyen 10 d'obturation sélective de l'espace 9.

La figure 6 représente plus en détail le moyen 10 qui est constitué de deux demi-anneaux 110 et 120 chacun mobile en rotation autour d'un axe (111 et 112 respectivement) sensiblement diamétral. Préférentiellement, des moyens type charnières (non référencés) sont fixés entre chaque demi-anneau 110, 120 et la plaque de partition 7, afin de permettre la rotation de chacun des demi-anneaux 110, 120 entre une position de fermeture de l'espace 9 représentée en traits pleins sur la figure, et une position de pleine ouverture (traits mixtes) pour laquelle les demi-anneaux sont plaqués contre la plaque 7, en partie centrale du tube 2.

La plaque 7 n'est cependant pas nécessairement présente. Il peut être envisagé dans ce cas, sans sortir du cadre de l'invention de faire tourner chacun des deux demi-anneaux 110,120 grâce à deux axes 111, 112, actionnés depuis l'extérieur du tube 2 par tout moyen connu en soi et dans les conditions décrites ci-avant. Les deux axes peuvent être facilement engrénés entre eux.

La figure 7 montre un détail d'un profil préférentiel de chaque demi-anneau 110,120 dont la partie périphérique est biseautée afin d'améliorer l'aérodynamique du flux gazeux lorsque les demi-anneaux sont en position ouverte. En outre une bague formant une butée 113 peut avantageusement être prévue à l'intérieur du tube 2 afin de bien caler chaque demi-anneau en position de recouvrement maximal de l'espace inter-tubes 9.

La figure 8 montre en coupe longitudinale partielle un autre mode de réalisation du moyen 10 d'obturation sélective selon l'invention. Selon cette figure, une bague coulissante 125 est prévue; elle peut translater à partir d' une position "arrière" telle que représentée sur cette figure, correspondant à la fermeture de l'espace inter-tube 9. Une butée 126 peut être prévue afin de limiter la course de la bague 125. En position d'ouverture la bague 125 est par exemple en butée contre la paroi interne 127 du tube 2. Tout autre moyen peut être utilisé pour former les butées. Une tringlerie peut actionner la bague en translation, en fonction de la température des gaz d'échappement.

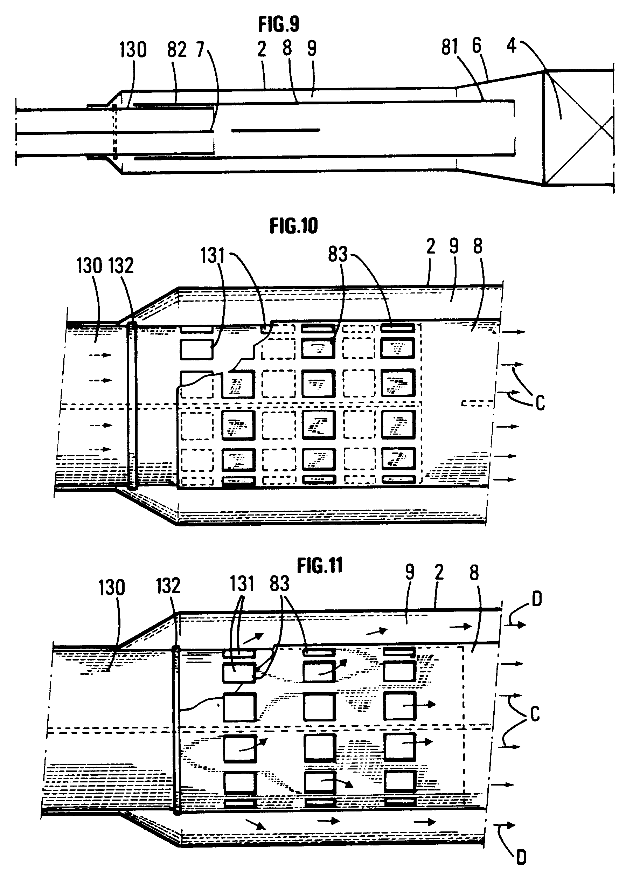

Les figures 9 à 11 montrent un autre exemple de réalisation du moyen d'obturation sélective selon l'invention.

La figure 9 représente en coupe longitudinale la ligne d'échappement selon l'invention c'est-à-dire équipée du tube interne 8 débouchant près du monolithe 4 (ou catalyseur) et d'un moyen d'obturation sélective.

Le moyen d'obturation sélective est ici constitué d'un tube perforé 130 monté téléscopiquement à l'intérieur du tube 8, sur une partie de sa longueur au niveau de son extrémité 82. Le tube perforé 130 s'étend jusqu'à l'intérieur du collecteur 1.

L'extrémité 82 du tube 8 est en outre pourvue de perforations 83 qui coopèrent avec des perforations 131 du tube 130.

Le nombre et la forme des perforations 131 et 83 sont tels que dans une certaine position, l'extrèmité 82 est complètement obturée.

La figure 10 représente un positionnement des tubes 130 et 8 pour lequel les gaz d'échappement passent tous à l'intérieur du tube 8. Les flèches C montrent le trajet des gaz lorsque les perforations 83 et 131 sont mutuellement juxtaposées formant ainsi une paroi pleine depuis le collecteur 1 jusqu'à l'intérieur du tube 8.

Un mouvement de translation par exemple, du tube 130 permet de superposer les perforations respectives des 2 tubes, c'est-à-dire de créer des passages pour le gaz circulant dans le tube intérieur 8. Les gaz peuvent ainsi traverser l'espace annulaire 9, tel que le montrent les flèches D sur la figure 11.

Une butée 132 peut être prévue sur le tube 130 afin de définir notamment les positions de pleine ouverture et de pleine fermeture. Des positions d'ouverture intermédiaire peuvent avantageusement être créées, d'où il résulte une modulation du débit de gaz dans l'espace inter-tubes 9.

Bien entendu un autre mouvement du tube 130 (rotation par exemple) pourrait entrainer l'ouverture de l'extrémité 82 du tube 8, sans sortir du cadre de l'invention.

En outre, tout moyen connu en soi peut être envisagé par actionner le tube 130.

Les différentes possibilités énoncées ci-dessus pour le moyen d'obturation sélective ne sont bien entendu nullement limitatives.

L'homme de métier sera en mesure d'imaginer à partir de la description qui vient d'être faite d'autres modifications et/ou adjonctions ne sortant pas du cadre de la présente invention.

## Revendications

1. Dispositif destiné à améliorer le fonctionnement d'un catalyseur (3) placé sur la tubulure d'échappement d'un moteur à combustion interne, ladite tubulure d'échappement étant constituée d'un tube (2) relié d'un coté au collecteur (1) des gaz de combustion issus du ou des cylindres et débouchant par son autre extrémité sur le cône d'entrée dudit catalyseur (3) caractérisé en ce qu'il comprend :
- au moins un tube (8) interne à ladite tubulure (2), de section réduite par rapport à ladite tubulure, d'épaisseur faible et ayant une première extrémité (81) qui débouche à proximité dudit catalyseur (3), et
- un moyen (10) destiné à obturer sélectivement le volume intertube (9) délimité entre ledit tube interne (8) et ledit tube (2), en fonction de la température des gaz d'échappement amenés vers ledit catalyseur (3).

2. Dispositif selon la revendication 1 caractérisé en ce que ledit moyen (10) d'obturation sélective est constitué d'un élément bilame (100) annulaire fixé sur ledit tube (2).

3. Dispositif selon la revendication 1 caractérisé en ce que ledit moyen d'obturation sélective est constitué d'un élément annulaire (110, 120) dont la section recouvre complètement l'entrée dudit espace intertube (9) lorsque le catalyseur n'est pas amorçé.

4. Dispositif selon la revendication 3 caractérisé en ce que ledit élément annulaire est constitué de deux demi-anneaux (110,120) et en ce que chaque demi-anneau peut tourner autour d'un axe (111,112) sensiblement diamétral de sorte que chaque demi-anneau peut être amené en partie centrale de l'embouchure des tubes lorsque le volume intertube (9) doit être perméable aux gaz d'échappement.

5. Dispositif selon la revendication 3 caractérisé en ce que ledit élément annulaire est constitué d'une bague (125) pouvant coulisser axialement entre une première (126) et une deuxième (127) butée, desdites butées correspondant respectivement à la fermeture de l'espace intertube (9) et à l'ouverture dudit espace (9) vis-à-vis des gaz d'échappement.

6. Dispositif selon la revendication 1 caractérisé en ce que ledit moyen d'obturation sélective consiste en un élément (130) tubulaire perforé agencé téléscopiquement vis-à-vis d'une partie du tube interne (8), des perforations (131,83) dans l' élément tubulaire (130) et dans le tube interne (8) coopérant ensemble afin d'obturer sélectivement ledit volume intertubes (9).

7. Dispositif selon l'une quelconque des revendications précédentes caractérisé en ce qu'il comporte en outre un moyen 11 destiné à homogénéiser les vitesses des gaz d'échappement à l'entrée dudit catalyseur (4).

## Claims

1. A device designed to improve operation of a catalytic convertor (3) located on the exhaust pipe of an internal combustion engine, the exhaust pipe being made up of a pipe (2) connected on one side to a manifold (1) for the combustion gas emitted from the cylinder(s) and opening at its other end onto the inlet cone of the catalyst (3), characterised in that it comprises:
- at least one thin-walled pipe (8) inside the pipe (2) having a section smaller than that of the pipe (2) and having a first end (81) opening close to the catalyst (3), and
- a means (10) designed for selectively closing the inter-pipe space (9) defined between the inner pipe (8) and the pipe (2) depending on the temperature of the exhaust gases conveyed to the catalyst (3).

2. A device in accordance with claim 1, characterised in that the selective closing means (10) is an annular bimetallic strip (100) fixed to the pipe (2).

3. A device in accordance with claim 1, characterised in that the selective closing means is an annular element (110, 120) whose section completely covers the inlet of the inter-pipe space (9) when the catalyst is not primed.

4. A device in accordance with claim 3, characterised in that the annular element is two half-rings (110, 120) and in that each half-ring may rotate on a substantially diametral pin (111, 112) so that each half-ring may be moved to the central part of the inlet of the pipes when the exhaust gases are required to permeate the inter-pipe space (9).

5. A device in accordance with claim 3, characterised in that the annular element is a ring (125) that may slide axially between a first (126) and a second (127) stop, the stops corresponding respectively to the closure of the inter-pipe space (9) and opening of this space (9) to the exhaust gases.

6. A device in accordance with claim 1, characterised in that the selective closing means is a perforated tubular element (130) telescopically mounted in relation to a section of the inner pipe (8), the perforations (131, 83) in the tubular element (130) and the inner pipe (8) co-operating with each other to selectively close off the inter-pipe space (9).

7. A device in accordance with one of the previous claims, characterised in that it also has a means 11 for modulating to a uniform speed the flows of exhaust gases at the inlet of the catalyst (4).

## Patentansprüche

1. Vorrichtung zur Verbesserung der Arbeitsweise eines an den Auslaßstutzen einer Brennkraftmaschine angebrachten Katalysators (3), wobei dieser Auslaßstutzen gebildet wird aus einem Rohr (2), das auf einer Seite mit dem Kollektor (1) für die Verbrennungsgase gebildet wird, die aus dem oder den Zylindern stammen und mit seinem anderen Ende an dem Eintrittskonus dieses Katalysators (3) mündet, **dadurch gekennzeichnet,** daß sie umfaßt:
- wenigstens ein Rohr (8) innerhalb dieses Stutzens (2) von, bezogen auf diesen Stutzen, vermindertem Querschnitt, von geringer Dicke und mit einem ersten Ende (81), das benachbart diesem Katalysator (3) mündet, und
- ein Mittel (10), das dadurch bestimmt ist selektiv das zwischen diesem Innenrohr (8) und diesem Rohr (2) begrenzte Zwischenrohrvolumen (9) als Funktion der Temperatur der Austrittsgase, die gegen diesen Katalysator (3) geführt werden, zu schließen.

2. Vorrichtung nach Anspruch 1, **dadurch gekennzeichnet,** daß dieses Mittel (10) zum selektiven Verschließen gebildet wird durch ein an diesem Rohr (2) befestigtes ringförmiges Bimetallelement (100).

3. Vorrichtung nach Anspruch 1, **dadurch gekennzeichnet,** daß dieses Mittel zum selektiven Verschließen gebildet wird aus einem Ringelement (110, 120), dessen Querschnitt völlig den Eintritt dieses Zwischenrohrraums (9) überdeckt, wenn der Katalysator nicht gezündet worden ist.

4. Vorrichtung nach Anspruch 3, **dadurch gekennzeichnet,** daß dieses Ringelement aus zwei Halbringen (110, 120) besteht und daß jeder Halbring um eine im wesentlichen diametrale Achse (111, 112) drehen kann, derart, daß jeder Halbring in den Mittelteil der Öffnung der Rohre geführt werden kann, wenn das Zwischenrohrvolumen (9) für die Austrittsgase durchlässig sein soll.

5. Vorrichtung nach Anspruch 3, **dadurch gekennzeichnet,** daß dieses Ringelement gebildet wird aus einem Ring (125), der axial zwischen einem ersten (126) und einem zweiten (127) Anschlag gleiten kann, wobei diese Anschläge jeweils dem schließen des Rohrzwischenraums (9) und dem Öffnen dieses Raums (9) gegenüber den Austrittsgasen entsprechen.

6. Vorrichtung nach Anspruch 1, **dadurch gekennzeichnet,** daß dieses Mittel zum selektiven Schließen aus einem rohrförmigen perforierten Element (130) besteht, das teleskopartig, bezogen auf einen Teil des Innenrohres (8), ausgebildet ist, wobei Perforationen (131, 83) in diesem röhrenförmigen Element (130) und in dem Innenrohr (8) zusammenwirken, um selektiv dieses Zwischenrohrvolumen (9) zu schließen.

7. Vorrichtung nach einem der vorherigen Ansprüche, **dadurch gekennzeichnet,** daß sie im übrigen ein Mittel 11 umfaßt, das dazu bestimmt ist, die Geschwindigkeiten der Austrittsgase am Eintritt dieses Katalysators (4) zu homogenisieren.
